Europäisches Patentamt

European Patent Office

Office européen des brevets

(19)

(11) **EP 1 298 927 A1**

(12) **EUROPEAN PATENT APPLICATION**
published in accordance with Art. 158(3) EPC

(43) Date of publication:
02.04.2003 Bulletin 2003/14

(51) Int Cl.⁷: **H04N 7/18**

(21) Application number: **01912466.8**

(86) International application number:
**PCT/JP01/02138**

(22) Date of filing: **16.03.2001**

(87) International publication number:
**WO 01/089218 (22.11.2001 Gazette 2001/47)**

(84) Designated Contracting States:
**DE FR GB**

(30) Priority: **18.05.2000 JP 2000147051**

(71) Applicant: **Sanyo Electric Co., Ltd.**
**Moriguchi-shi, Osaka-fu 570-8677 (JP)**

(72) Inventor: **SUNAGAWA, Osami**
**Toyonaka-shi, Osaka 561-0884 (JP)**

(74) Representative: **Glawe, Delfs, Moll & Partner**
**Patentanwälte**
**Postfach 26 01 62**
**80058 München (DE)**

(54) **RECORDER**

(57) A recording apparatus includes a recording medium 4 formed with a plurality of unit memory areas thereon. When no alarm signal is generated, a recording circuit 3 writes image signals into the unit memory areas in a cyclical manner. When the alarm signal is generated, the recording circuit 3 overwrites the image signals into the unit memory areas, which are intermittently present. Although a frame rate of the image signals at a time of writing is always 10 fps irrespective of the alarm signal, one portion of the image signals written before generating the alarm signal is deleted by the overwriting, which is after generating the alarm signal. The frame rate of the image signal that is remained as a result of not being overwritten decreases to 2 fps.

FIG. 1

EP 1 298 927 A1

**Description**

**TECHNICAL FIELD**

The present invention relates to a recording apparatus. More specifically, the present invention relates to a recording apparatus that is applied to a surveillance camera system, for example, and records in a cyclical manner image signals output at intervals of a predetermined period from the surveillance camera into a plurality of unit areas formed in a recording medium.

**PRIOR ART**

In order to monitor an illegal act, an illegal intruder or the like, a surveillance camera is installed in a casino, a factory, a shop, and the like. Image signals output from the surveillance camera are applied to a time lapse VCR via a multiplexer, thereby being recorded into a recording medium intermittently. As for a recording method of the image signals, there are various methods, that is, one of which always records the image signals irrespective of whether or not a trouble occurs, another of which generates an alarm signal in response to a luminance change of the image signals as a result of an entry of a suspicious person, thereby starting recording the image signals using the alarm signal as a trigger. Furthermore, the recording method using the alarm signal as a trigger is classified into a pre-alarm recording method (skip back method) and a post-alarm method.

The pre-alarm recording method is a method in which the image signals are saved in a ring buffer memory before the alarm signal is generated, and the image signals saved in the ring buffer memory are recorded into the recording medium at a time that the alarm signal is generated. This makes it possible to record photographed images several minutes before the alarm signal is generated. On the other hand, the post-alarm recording method is a method in which the recording is started merely in response to a generation of the alarm signal, and only the photographed images after the alarm signal is generated are recorded in the recording medium.

In a conventional surveillance camera system using the time lapse VCR, an intermittent recording is performed at a ratio of one frame per one second before the alarm signal is generated, and after the alarm signal is generated, the intermittent recording is performed at a ratio of 20 frames per one second. However, recording intervals of the image signals are shortened in response to the generation of the alarm signal, and therefore, there was a slight possibility that important evidence is not retained when no alarm signal is generated.

In order to solve such the problem, another prior art adopts the pre-alarm recording method, in which the image signals before the alarm signal is generated are accumulated in the ring buffer memory at a high frame rate, and the image signals in the ring buffer memory are recorded in the recording medium in response to the generation of the alarm signal. However, this prior art gave rise to a problem in terms of a cost due to a fact that the frame rate is so high that a huge amount of the ring buffer memory was needed.

Incidentally, there is recently sold a surveillance camera system in which the image signals are recorded in a disk recording medium such as a hard disk due to a high maintenance performance and an accessibility. A random access is possible in the disk recording medium so that the pre-alarm recording is realized using the disk recording medium itself as the ring buffer memory. However, in the disk recording medium, there is a possibility that a fragment in a vacant area reduces an effective recording rate, thereby destructing a recording process. Furthermore, if it is attempted to equalize the recording frame rate before and after the alarm signal is generated, and retain many recording capacities of the image signals before the alarm signal is generated, the recording capacity of the image signals after the alarm signal is generated relatively deteriorates. In order to record the image signals after the alarm signal is generated for long hours, it is needed to increase a total capacity of the disk recording medium, thus giving rise to the cost problem as described above.

**SUMMARY OF THE INVENTION**

Therefore, it is a primary object of the present invention to provide a recording apparatus capable of restraining a capacity of the recording medium, and recording the image signals at a high frame rate even before the alarm signal is generated.

According to the present invention, a recording apparatus that records into a memory image signals output from a surveillance camera, comprises: an inputting means that inputs an alarm signal generated from outside when a trouble occurs to a subject under surveillance; a first recording means that records the image signals into the memory in a cyclical manner when the alarm signal is not input; a setting means that sets overwrite prohibiting areas on the memory when the alarm signal is input; and a second recording means that records the image signals into the memory in such a manner as to avert the overwrite prohibiting areas.

When the alarm signal is not input, the image signals are recorded by the first recording means into the memory in a cyclical manner. When the alarm signal is input, the overwrite prohibiting areas are set on the memory, and the second recording means records the image signals into the memory in such a manner as to avert the overwrite prohibiting areas. Since it is allowed to record in areas other than the overwrite prohibiting areas, a recording capacity of the image signals after the alarm signal is generated is substantially enlarged. In addition, the image signals at a high frame rate recorded before the alarm signal is generated are remained in the overwrite prohibiting areas.

It is preferred that a first area recorded from before a predetermined time period when the alarm signal is input until the alarm signal is input be detected. The overwrite prohibiting areas are set on the first area at predetermined intervals.

According to the present invention, a recording apparatus that records image signals into a recording medium formed with a plurality of unit areas thereon, comprises: a determining means that determines whether or not an alarm signal is generated; a first writing means that writes the image signals into a plurality of unit areas in a cyclical manner when the alarm signal is not generated; and a second writing means that writes the image signals into the unit areas present in an intermittent manner when the alarm signal is not generated.

The image signals are written into a plurality of unit areas in a cyclical manner when the alarm signal is not generated, and written into the unit areas intermittently present when the alarm signal is generated. Therefore, the image signals written before the alarm signal is generated are overwritten by the image signals after the alarm signal is generated. Since it is allowed to overwrite, a recording capacity of the image signals after the alarm signal is generated is substantially enlarged. In addition, the image signals at a high frame rate recorded before the alarm signal are generated are remained in an unit area not to be overwritten.

In a preferred aspect, a writing time of the image signals already written into the unit areas of a writing destination is detected by a detecting means. Furthermore, if the detected writing time is before a predetermined time prior to a generating time of the alarm signal, the image signals are written by a third writing means into unit areas continuously present. At this time, the second writing means performs a writing when the writing time is after the predetermined time.

It is noted that the detecting means may detect the writing time on the basis of an address of the unit areas.

In another preferred aspect, the first writing means and the second writing means mutually write the image signals into the unit areas at the same frame rate.

In still another preferred aspect, the second writing means suspends the writing when a predetermined time is elapsed.

In yet still another preferred aspect, each of the first writing means and the second writing means writes the image signals into each of the unit areas by the predetermined number of images

In another preferred aspect, the image signals are compressed image signals compressed by a predetermined method.

The above described objects and other objects, features, aspects and advantages of the present invention will become more apparent from the following detailed description of the present invention when taken in conjunction with the accompanying drawings.

**BRIEF DESCRIPTION OF THE DRAWINGS**

Figure 1 is a block diagram showing one embodiment of the present invention;
Figure 2 is an illustrative view showing one portion of an operation of the Figure 1 embodiment;
Figure 3 is a flowchart showing one example of a recording operation;
Figure 4 is a flowchart showing another example of the recording operation;
Figure 5 is a flowchart showing still another example of the recording operation;
Figure 6 is an illustrative view showing one example of a recording medium.

**BEST MODE FOR PRACTICING THE INVENTION**

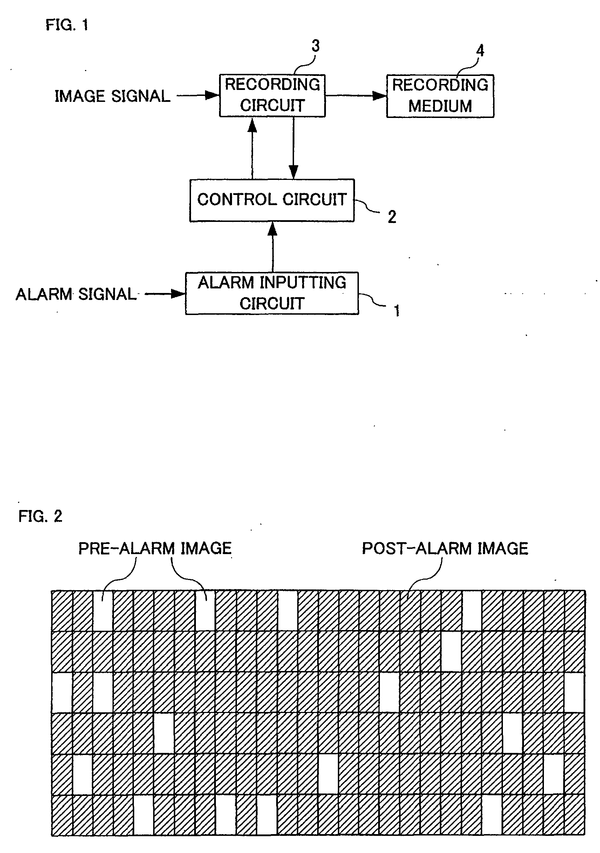

Referring to Figure 1, a recording apparatus in this embodiment includes an alarm inputting circuit 1 for inputting an alarm signal. The alarm signal is output from an image processing apparatus (not shown) in response to a luminance change of image signals produced by an illegal invasion by a suspicious person, for example. A control circuit 2 controls a recording circuit 3 on the basis of the alarm signal applied via the alarm inputting circuit 1 and a vertical synchronization signal output from the recording circuit 3. In addition to outputting the vertical synchronization signal multiplexed on the image signals to the control circuit 2, the recording circuit 3 intermittently selects the image signals in response to a control signal applied from the control circuit 2, and records the selected image signal into a recording medium 4 in a compressed state. It is noted that the image signals are input from a surveillance camera (not shown).

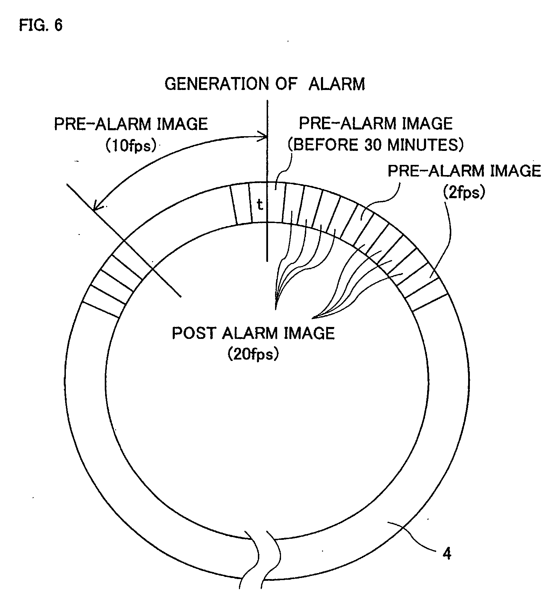

As for the recording medium 4, in addition to a memory in a ring form as shown in Figure 6, a memory in a disk form such as a hard disk, an MD (Mini Disk), a magnetooptical disk, and so on is applied. On a recording surface of the recording medium 4, a plurality of unit memory areas each of which has a predetermined size are formed. The compressed image signals output from the recording circuit 3 are cyclically recorded into the unit memory areas, which are continuously arranged with regard to its position, respectively. According to Figure 6, the unit areas are continued in a ring form, and the compressed image signals are respectively written into the unit memory areas clockwise.

The recording circuit 3 adopts a JPEG as a method of compressing the image signals. This allows the image signals of each of the frames intermittently selected to be compressed one by one. Herein, a compression rate is determined in such a manner that one frame of the compressed image signal is stored in one unit memory area. Therefore, the compressed image signal is written into each of the unit memory areas one frame by one frame.

The recordable number when the image signals are actually recorded into the recording medium 4 shown in Figure 6 is examined. In a case that the conventional pre-alarm recording method is adopted, and a recording is performed at a ratio of 10 frames per second for a time period of 10 minutes before the alarm signal is generated, thereby performing a recording at a ratio of 20 frames per second for a time period of 10 minutes after the alarm signal is generated, 18.600 frames of a memory capacity is necessary according to Equation 1.

$$10 \text{ frames x } 60 \text{ seconds x } 10 \text{ minutes} + 20 \text{ frames x } 60 \text{ seconds x } 10 \text{ minutes} = 18.600 \text{ frames} \qquad (1)$$

Although recorded images at a high frame rate are necessary immediately before the alarm signal is generated, there is no practical problem even if the frame rate of the recorded images are low if far in advance before a generation of the alarm signal. Herein, in a case that a recording is performed at a ratio of 2 frames per second during a time period of 5 or more minutes before a time that the alarm signal is generated, and a recording is performed at a ratio of 10 frames per second for a time period of 5 minutes before the alarm signal is generated, and a recording is performed at a ratio of 20 frames per second for a time period of 10 minutes after the alarm signal is generated, 15.600 frames of the memory capacity is sufficient according to Equation 2.

$$2 \text{ frames x } 60 \text{ seconds x } 5 \text{ minutes} + 10 \text{ frames x } 60 \text{ seconds x } 5 \text{ minutes} + 20$$

$$\text{frames x } 60 \text{ seconds x } 10 \text{ minutes} = 15.600 \text{ frames} \qquad (2)$$

As understood by comparing Equation 1 and Equation 2, 13.3 % of the memory capacity is less consumed compared to the former recording method in the latter recording method. In a case that a recording is performed at 2 frames per second in this 13.3 % memory capacity, it becomes possible to record the image signals for a time period of 20 minutes according to Equation 3. That is, it is possible to record in the recording medium 4 the image signals for a time period of 30 minutes before the alarm signal is generated.

$$(18.000 \text{ frames - } 15.600 \text{ frames}) / (2 \text{ frames x } 60 \text{ seconds}) = 20 \text{ minutes} \qquad (3)$$

Furthermore, in a case that a recording is performed at a ratio of 20 frames per one second in the memory area of 13.3 %, it is possible to record the image signals of 2 minutes according to Equation 4. That is, it is possible to record in the recording medium the image signal of 12 minutes after the alarm signal is generated.

$$(18000 \text{ frames -} 15600 \text{ frames}) / (20 \text{ frames x } 60 \text{ seconds}) = 2 \text{ minutes} \qquad (4)$$

Thus, it is possible to perform an effective surveillance operation along with restraining a cost by changing the recording frame rate among the first time, which is immediately before the alarm signal is generated, the second time, which is before the first time, and the third time, which is after the alarm signal is generated.

In this embodiment, three recording methods are adopted. A first recording method is a method in which a recording is performed at 10 fps for a time period of 10 minutes before the alarm signal is generated, and a recording is performed at 20 fps for a time period of 10 minutes after the alarm signal is generated. A second method is a method in which a recording is performed at 2 fps for a time period of 25 minutes 5 or more minutes before the alarm signal is generated, a recording is performed at 10 fps for a time period of 5 minutes immediately before the alarm signal is generated, and a recording is performed at 20 fps for a time period of 10 minutes after the alarm signal is generated.

A third method is a method in which a recording is performed at 2 fps for a time period of 5 minutes 5 or more minutes before the alarm signal is generated, a recording is performed at 10 fps for a time period of 5 minutes immediately before the alarm signal is generated, and a recording is performed at 20 fps for a time period of 12 minutes after the alarm signal is generated.

However, since it is not possible to know a time when the alarm signal is generated, the second recording method or the third recording method is to always perform the recording at 10 fps, and when the alarm signal is generated, overwrite the image signals obtained thereafter into recorded unit memory areas. The overwritten unit memory areas are selected in such a manner that 2 fps is retained with respect to the image signals for a time period of 25 minutes or 5 minutes 5 or more minutes before the alarm signal is generated.

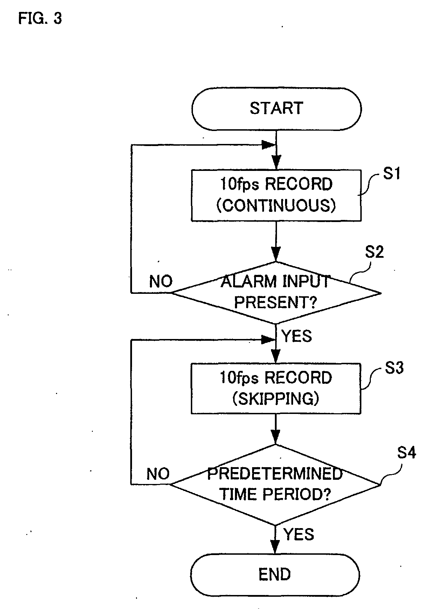

At this time, if the image signals before the alarm signal is generated and the image signals after the alarm signal is generated scatter as shown in Figure 2, it becomes difficult to select the unit memory areas to be overwritten, and it may give rise to a possibility that the recording process is destructed due to a deterioration of an effective recording speed concurrent with a head seek. Consequently, in this embodiment, this problem is solved by cyclically writing the image signals into the unit memory areas continuously present before the alarm signal is generated, and overwriting the image signals into the unit memory areas intermittently present (written areas) when the alarm signal is generated. These operations are described in detail referring to Figure 3 - Figure 5. It is noted that each of operations in Figure 3 - Figure 5 is an operation executed by the control circuit 2, thereby controlling a recording operation of the recording circuit 3.

According to Figure 3, a process of a step S1 is executed during a time period that the alarm signal is not input, and the compressed image signals are recorded into the recording medium 4 at a ratio of 10 frames per second. At this time, each of the compressed image signals is written into the unit memory areas continuously present one frame by one frame. When the alarm signal is input, the process proceeds to a step S3, determining YES in a step S2. Although the compressed image signals are written at a ratio of 10 frames per second in the step S3, the unit memory areas of a writing destination are intermittently selected. That is, if the four frames of the compressed image signals are recorded (overwritten) in the continuous four unit memory areas, a subsequent unit memory area is skipped. The subsequent four frames of the image signals are recorded (overwritten) in the continuous four unit memory areas next to the skipped unit memory area. In other words, an overwrite prohibiting areas are set in response to an input of the alarm signal, and the compressed image signals are recorded in such a manner as to avert the set overwrite prohibiting areas.

Since the image signals before the alarm signal is generated remain in the skipped unit memory areas (overwrite prohibiting areas), a frame rate of 2 fps is retained with regard to the image signals before the alarm signal is generated. With regard to the image signals after the alarm signal is generated, 10 fps is retained. When a predetermined time period lapses after the alarm signal is generated, the process is ended, determining YES in a step S4.

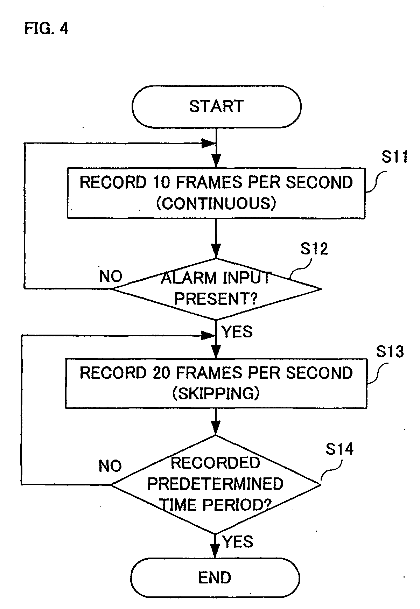

A process shown in figure 4 is almost the same as the process shown in Figure 3, and therefore, duplicated descriptions are omitted. They are different in that in a step S13 after the alarm signal is generated, a skipping recording is performed at a ratio of 20 frames per second, thereby retaining 2 fps with regard to the image signals before the alarm signal is generated, and 20 fps is retained with regard to the image signals after the alarm signal is generated.

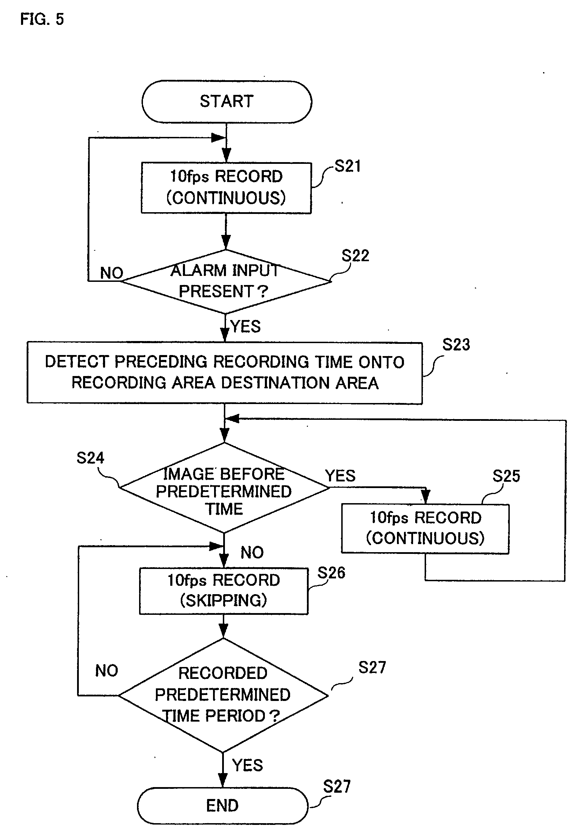

In a flowchart shown in Figure 5, a continuous recording is performed even after the alarm signal is generated, and a recording manner is changed from the continuous recording to the skipping recording when the recording time of the image signals to be overwritten becomes a time, which is before a predetermined time period, than a time when the alarm signal is generated.

To be specifically described, processes in steps S21 and S22 are the same as the step S1 and S2 shown in Figure 3, or steps S11 and S12 shown in Figure 4. The process proceeds to a step S23 when the alarm signal is generated, and a recording time is detected with regard to the image signals already recorded into the unit memory areas to be overwritten. If the detected recording time is a time before the predetermined time period than a generating time of the alarm signal, YES is determined in a step S24, and the continuous recording is performed in a step S25. The compressed image signals are written at a ratio of 10 frames per second into the unit memory areas continuously present. Upon completion of recording one frame of the compressed image signals, the process returns to the step S24.

On the other hand, if the detected recording time is after a time prior to the predetermined time period than the generating time of the alarm signal, the skipping recording is performed in a step S26, determining NO in the step S24. Although the recording frame rate of the compressed image signals 10 fps similar to a case of the continuous recording, the unit memory areas of the recording destination are discontinuous. That is, continuous four frames of the compressed image signals are recorded into the four unit memory areas continuously present, the next unit memory area is skipped, and the subsequent four frames of the compressed image signals are recorded into the four unit memory areas subsequent to the skipped unit memory areas. Thus, in the skipping recording, the overwrite prohibiting areas are intermittently set, and the compressed image signals are recorded in such a manner as to avert the overwrite prohibiting areas, allowing the recording frame rate of the compressed image signals to become 2 fps in the predetermined time period immediately before the alarm signal is generated. If a predetermined time is lapsed after the alarm signal is generated, the process is ended, determining YES in a step S27.

It is noted that the recording time of the image signal stored in each of the unit memory areas is calculated on the basis of an address of the unit memory area accessed when the alarm signal is generated and an address of the unit memory area currently accessed. In addition, a determination in the step S24 is carried out on the basis of the calculated recording time. Furthermore, although descriptions are rather omitted, it is also possible to combine the flowchart shown in Figure 4 and the flowchart shown in Figure 5.

Referring to Figure 6, descriptions are made with regard to an operation in a case of recording the compressed image signals into the recording medium 4 formed with 18.000 of unit memory areas thereon in accordance with the third recording method. When no alarm signal is generated, the compressed image signals are cyclically recorded into the unit memory areas continuously present. Since the recording frame rate when no alarm signal is generated is 10 fps, the unit memory area of a recording destination returns to a forefront of the unit memory areas in 30 minutes. After 30 minutes has passed after starting the recording, the unit memory areas in which the image signal, which is 30 minutes before, are recorded are selected as the recording destination.

When the alarm signal is generated, the recording frame rate of the compressed image signal is changed from 10 fps to 20 fps, and the unit memory areas intermittently present are selected as the recording destination. That is, with regard to portions in which the image signals, which are from 5 minutes to 30 minutes before the time that the alarm signal is generated, are recorded, the next one unit memory area is skipped if the continuous four unit memory areas are selected as the recording destination. Then, the four unit memory areas subsequent to the skipped unit memory areas (overwrite prohibiting areas) are selected once again as the recording destination, which allows the frame rate of 2 fps to be retained with regard to the image signals, which is from 5 minutes to 30 minutes before the time that the alarm signal is generated.

With regard to the image signals for a time period of 5 minutes immediately before the alarm signal is generated, it is necessary to retain 10 fps. This does not allow the unit memory areas in which the image signals for a time period of 5 minutes is recorded to be overwritten by the image signal after the alarm signal is generated. According to Equation 5, there exist 3.000 of unit memory areas not to be overwritten, and the skipping recording after the alarm signal is generated is carried out with respect to the remaining 15.000 of the unit memory areas. According to Equation 6, the unit memory areas assigned for the skipping recording are 2.000, and it is possible to record the image signals for a time period of 10 minutes after the alarm signal is generated according to Equation 7.

$$10 \text{ units x } 60 \text{ seconds x } 5 \text{ minutes} = 3.000 \text{ units} \tag{5}$$

$$15.000 \text{ units x } 4/5 = 12.000 \text{ units} \tag{6}$$

$$12.000 \text{ units} / (20 \text{ units x } 60 \text{ seconds}) = 10 \text{ minutes} \tag{7}$$

As understood from the above descriptions, when no alarm signal is generated, the image signals are cyclically written into the unit memory areas continuously present, and when the alarm signal is generated, the image signals are overwritten into the unit memory areas intermittently present. This makes it possible to restrain the capacity of the recording medium 4, and record the image signals at a high frame rate even before the alarm signal is generated. In addition, the address of the unit memory area of the writing destination (overwriting destination) is dependent on a condition previously set so that it is easy to carry out an address control in either case of the recording or the reproducing.

It is noted that in this embodiment, one frame of the compressed image signal is to be recorded into one unit memory area. However, a plurality of frames of the compressed image signals may also be recorded in one unit memory area.

It is noted that in the embodiment, the recording time of the image signal stored in the unit memory areas currently accessed is to be calculated on the basis of the address of the unit memory area accessed when the alarm signal is generated and the address of the unit memory areas currently accessed. However, it may be possible that recording time information of the image signal stored in each of the unit memory areas is written into another area (management area), and the determination in the step S24 shown in Figure 5 is carried out on the basis of this recording time information.

Furthermore, although in this embodiment, there is only single manner of the skipping recording, and there is only single timing at which the continuous recording is moved to the skipping recording in overwriting, it may be possible to prepare a plurality of the skipping manners, and move the recording manner from one to another at a plurality of timings.

In addition, in this embodiment, descriptions are made assuming a case that the image signal output from one surveillance camera is recorded. However, it may also be applied to a case that a plurality kinds of image signals output from a plurality of surveillance cameras are recorded. It is noted that one portion of the image signal recorded before the alarm signal is generated is overwritten by the image signal after the alarm signal is generated, thus necessary to assign recording media and recording areas mutually different to each of the surveillance cameras.

Although the present invention has been described and illustrated in detail, it is clearly understood that the same is by way of illustration and example only and is not to be taken by way of limitation, the spirit and scope of the present invention being limited only by the terms of the appended claims.

**Claims**

1.   A recording apparatus that records into a memory image signals output from a surveillance camera, comprising:

an inputting means that inputs an alarm signal generated from outside when a trouble occurs to a subject under surveillance;
a first recording means that records said image signals into said memory in a cyclical manner when said alarm signal is not input;
a setting means that sets overwrite prohibiting areas on said the memory when said alarm signal is input; and
a second recording means that records said image signals into said memory in such a manner as to avert the overwrite prohibiting areas.

2.   A recording apparatus according to claim 1, wherein
said setting means includes a detecting means that detects a first area recorded by said first recording means from before a predetermined time period when said alarm signal is input until said alarm signal is input, and an overwrite prohibiting areas setting means that sets the overwrite prohibiting areas on said first area at predetermined intervals.

3.   A recording apparatus that records image signals into a recording medium formed with a plurality of unit areas thereon, comprising:

a determining means that determines whether or not an alarm signal is generated;
a first writing means that writes said image signals into said plurality of unit areas in a cyclical manner when said alarm signal is not generated; and
a second writing means that writes said image signals into said unit areas intermittently present when said alarm signal is not generated.

4.   A recording apparatus according to claim 3, further comprising:

a detecting means that detects a writing time of said image signal already written into said unit area of a writing destination; and
a third writing means that writes said image signals into said unit area continuously present when said writing time is before a predetermined time prior to a generating time of said alarm signal, wherein
said second writing means performs a writing when said writing time is after said predetermined time.

5.   A recording apparatus according to claim 4, wherein
said detecting means detects said writing time on the basis of an address of said unit area.

6.   A recording apparatus according to any one of claims 3 to 5, wherein
said first writing means and said second writing means write said image signals into said unit areas at the same frame rate with each other.

7.   A recording apparatus according to any one of claims 3 to 6, wherein said second writing means suspends the writing when a predetermined time period is elapsed.

8.   A recording apparatus according to any one of claims 3 to 7, wherein each of said first writing means and said second writing means writes said image signals into each of said unit areas by the predetermined number of images

9.   A recording apparatus according to any one of claims 3 to 7, wherein said image signal is a compressed image signal compressed by a predetermined method.

FIG. 1

IMAGE SIGNAL → **RECORDING CIRCUIT** 3 → **RECORDING MEDIUM** 4

**CONTROL CIRCUIT** 2

ALARM SIGNAL → **ALARM INPUTTING CIRCUIT** 1

FIG. 2

PRE-ALARM IMAGE                    POST-ALARM IMAGE

FIG. 3

```
                    ┌─────────────────┐
                    │      START      │
                    └─────────────────┘
                             │
      ┌──────────────────────┤
      │                      ▼
      │          ┌─────────────────────┐   ┌─ S1
      │          │   10fps RECORD      │
      │          │   (CONTINUOUS)      │
      │          └─────────────────────┘
      │                      │
      │                      ▼
      │    NO         ◇─────────────◇    ┌─ S2
      ├───────────────  ALARM INPUT
      │               ◇  PRESENT?   ◇
      │                ◇───────────◇
      │                      │ YES
      │   ┌──────────────────┤
      │   │                  ▼
      │   │      ┌─────────────────────┐   ┌─ S3
      │   │      │   10fps RECORD      │
      │   │      │   (SKIPPING)        │
      │   │      └─────────────────────┘
      │   │                  │
      │   │                  ▼
      │   │   NO      ◇─────────────◇   ┌─ S4
      │   └───────────  PREDETERMINED
      │               ◇  TIME PERIOD? ◇
      │                ◇───────────◇
      │                      │ YES
      │                      ▼
      │              ┌─────────────┐
      │              │     END     │
      │              └─────────────┘
```

FIG. 4

```
                    ┌──────────────────┐
                    │      START       │
                    └────────┬─────────┘
                             │
   ┌─────────────────────────┤
   │                         ▼                            S11
   │    ┌────────────────────────────────────────┐  ⌐
   │    │   RECORD 10 FRAMES PER SECOND           │
   │    │           (CONTINUOUS)                  │
   │    └────────────────────┬───────────────────┘
   │                         ▼                 S12
   │   NO          ◇─────────────────────◇  ⌐
   │◄──────────────   ALARM INPUT
   │               ◇    PRESENT?          ◇
   │                └─────────┬─────────┘
   │                          │ YES
   │  ┌───────────────────────┤
   │  │                       ▼                          S13
   │  │  ┌─────────────────────────────────────────┐  ⌐
   │  │  │   RECORD 20 FRAMES PER SECOND            │
   │  │  │           (SKIPPING)                     │
   │  │  └──────────────────┬──────────────────────┘
   │  │                     ▼                  S14
   │  │  NO       ◇──────────────────────◇  ⌐
   │  └◄─────────  RECORDED
   │            ◇  PREDETERMINED
   │            ◇  TIME PERIOD?          ◇
   │             └──────────┬──────────┘
   │                        │ YES
   │                        ▼
   │              ┌──────────────────┐
   │              │       END        │
   │              └──────────────────┘
```

FIG. 5

```
                    ┌─────────────┐
                    │    START    │
                    └──────┬──────┘
                           │
          ┌────────────────▼────────────────┐
          │      ┌──────────────────┐        S21
          │      │   10fps RECORD   │──╮
          │      │   (CONTINUOUS)   │
          │      └─────────┬────────┘
          │                │
          │         ╱──────▼──────╲         S22
      NO  │        ╱  ALARM INPUT  ╲──╮
     ╭────┴───────╱    PRESENT ?    ╲
     │            ╲                 ╱
     │             ╲───────┬───────╱
     │                     │ YES
     │      ┌──────────────▼─────────────────┐   S23
     │      │ DETECT PRECEDING RECORDING TIME │──╮
     │      │   ONTO RECORDING AREA           │
     │      │   DESTINATION AREA              │
     │      └──────────────┬─────────────────┘
     │                     │
     │     S24      ╱──────▼──────╲
     │       ╮     ╱ IMAGE BEFORE  ╲   YES        ┌──────────────┐  S25
     │       ╰────╱  PREDETERMINED  ╲─────────────│ 10fps RECORD │──╮
     │            ╲     TIME        ╱             │ (CONTINUOUS) │
     │             ╲──────┬───────╱               └──────┬───────┘
     │                    │ NO                           │
     │      ┌─────────────▼──────────┐  S26              │
     │      │   10fps RECORD         │──╮                │
     │      │   (SKIPPING)           │◄──────────────────┘
     │      └─────────────┬──────────┘
     │                    │
     │            ╱───────▼───────╲
     │    NO     ╱    RECORDED      ╲   S27
     ╰──────────╱   PREDETERMINED    ╲──╮
                ╲  TIME PERIOD ?     ╱
                 ╲─────────┬────────╱
                           │ YES
                    ┌──────▼──────┐  S27
                    │     END     │──╮
                    └─────────────┘
```

FIG. 6

GENERATION OF ALARM

PRE-ALARM IMAGE
(10fps)

PRE-ALARM IMAGE
(BEFORE 30 MINUTES)

PRE-ALARM IMAGE
(2fps)

t

POST ALARM IMAGE
(20fps)

4

| | INTERNATIONAL SEARCH REPORT | International application No. |
|---|---|---|
| | | PCT/JP01/02138 |

A. CLASSIFICATION OF SUBJECT MATTER
    Int.Cl⁷  H04N 7/18

According to International Patent Classification (IPC) or to both national classification and IPC

B. FIELDS SEARCHED

Minimum documentation searched (classification system followed by classification symbols)
    Int.Cl⁷  H04N 7/18, H04N 5/91-5/95

Documentation searched other than minimum documentation to the extent that such documents are included in the fields searched
    Jitsuyo Shinan Koho        1922-1996     Toroku Jitsuyo Shinan Koho  1994-2001
    Kokai Jitsuyo Shinan Koho  1971-2001     Jitsuyo Shinan Toroku Koho  1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP, 9-163357, A (Nippon Soken Inc.), | 1-8 |
| Y | 20 June, 1997 (20.06.97), | 9 |
| | Full text; Figs. 1 to 9   (Family: none) | |
| X | JP, 10-66061, A (Olympus Optical Company Limited), | 1 |
| Y | 06 March, 1998 (06.03.98), | 9 |
| A | Full text; Figs. 1 to 6   (Family: none) | 2-8 |
| A | JP, 6-78266, A (Samsung Electron Co., Ltd.), | 1-9 |
| | 18 March, 1994 (18.03.94), | |
| | Full text; Figs. 1 to 4 | |
| | & US, 5880776, A1    & GB, 2258973, A | |
| | & DE, 4227175, A1    & KR, 9309102, B | |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 July, 2001 (05.07.01) | 17 July, 2001 (17.07.01) |

| Name and mailing address of the ISA/ | Authorized officer |
|---|---|
| Japanese Patent Office | |
| Facsimile No. | Telephone No. |

Form PCT/ISA/210 (second sheet) (July 1992)